# EUROPEAN PATENT SPECIFICATION

(11) **EP 1 526 753 B1**
(45) Date of publication and mention of the grant of the patent: **13.08.2008**
(21) Application number: 04300703.8
(22) Date of filing: 21.10.2004
(51) Int. Cl.: H04Q 11/04

(54) **Method for accessing data segments having arbitrary alignment**
Verfahren zum Zugriff auf Datensegmente mit beliebiger Ausrichtung
Procédé pour accéder à des segments de données ayant un alignement arbitraire

(30) Priority: 22.10.2003 US 691137
(43) Date of publication of application: 27.04.2005
(73) Proprietor: Alcatel Lucent, 75008 Paris (FR)
(72) Inventor: Robotham, Robert Elliot, Ottawa, Ontario K1H 5L8 (CA)
(74) Representative: Korakis-Ménager, Sophie

(56) References cited:
- US-A1- 2003 074 517
- US-B1- 6 480 943

## Description

### BACKGROUND OF THE INVENTION

### (1) Field of the Invention

The present invention relates generally to storage and retrieval of a data structure and, more particularly, to allocation of a data structure with respect to a plurality of storage devices.

### (2) Description of the Related Art

Many types of computer-related apparatus utilize storage devices to store data. For example, data may be stored temporarily in networking devices through which the data passes. Various constraints typically apply to such apparatus. For example, especially in the case of high-bandwidth or high-capacity apparatus, the bandwidth or capacity requirements of the apparatus may exceed the capabilities of available storage devices. To overcome the limitations of storage device, multiple storage devices may be employed and used together to provide higher combined bandwidth and/or capacity. However, even when multiple storage devices are used together, inherent characteristics of the storage devices can affect the efficiency with which data is stored or retrieved. For example, storage devices typically store or retrieve data in quantities of a unit of access. As one particular example, some storage devices, such as some memory devices, provide a burst access mode in which bursts of some number of bytes of data may be transferred in a single memory operation.

However, depending on the nature of the data being stored to or retrieved from the storage devices, incompatibilities can occur between characteristics of the data being stored or retrieved and characteristics of the storage devices. For example, in certain types of networking apparatus, data are communicated in units, such as cells. Larger quantities of data may be communicated by transferring a group of cells, such as a frame. In such cases, it can be useful to keep a frame of data from becoming fragmented during communication. Fragmentation can be avoided by transmitting, receiving, storing, and retrieving the cells of the frame together.

Difficulties can arise if a unit of the data (e.g., a frame) is of a different size or different alignment than a unit of access (e.g., memory burst size). For example, unless a unit of data is of a size equal to either a multiple or submultiple of the size of a unit of access and the unit of data is aligned with either a multiple or submultiple of the size of a unit of access, inefficiencies can occur during storage and/or retrieval. One way inefficiencies can occur is if the beginning of a unit of data does not coincide with the beginning of a multiple or submultiple of a unit of access. In such a case, additional data not part of the unit of data is retrieved within the first instance of a unit of access so as to ensure that the first instance of a unit of access will include the beginning of the unit of data. Another way inefficiencies can occur is if the end of a unit of data does not coincide with the end of a multiple or submultiple of a unit of access. In such a case, additional data not part of the unit of data is retrieved within the last instance of a unit of access so as to ensure that the last instance of the unit of access will include the end of the unit of data. Since the additional data is typically discarded, the portion of the bandwidth of the storage devices used to transfer such data is wasted.

While alignment of units of data with units of access may, in some cases, be established when such units of data are written to a storage device, such initial alignment does not guarantee that the alignment will be preserved when data is read from the storage device. For example, the alignment of accesses to the data structure can change between when the data is written and read, as may occur, for example, in the case of packet alteration. Furthermore, it is possible that the same data may be read multiple times with different alignments for the different reads, as may occur, for example, in the case of multicast communications, where it is possible for packet alteration to occur differently for different destinations.

In a broader sense, data structures comprising data may be stored in and retrieved from the storage devices. Such storage and retrieval may be performed in increments of the data of such data structures. Such increments may or may not be compatible with read and write access may be provided to fixed-size portions of a data structure (e.g., frames) that are stored in units larger than the units of access. For example, storage devices based on dynamic random access memory (DRAM) devices have a characteristic of burst access, which defines the size of the unit of access and predefined starting points of the access (e.g., bursts of 16 bytes on predefined 16 byte boundaries). The bandwidth available from one device is often less than that specified by system requirements.

Another consideration that arises with respect to DRAM-based storage devices is that such storage devices have a bank access cycle time. While two different memory banks may be accessed in less than the bank access cycle time, a collision would occur if an attempt were made to access a particular bank more than once per bank access cycle time. Since alternating accesses among banks of single memory device may not be fast enough to meet system bandwidth needs, multiple memory devices are typically accessed. However, even in such cases, problems can arise when different portions of a unit of data, such as a frame, are stored in different units of access within the same memory bank. In such cases, it may be necessary to wait for the duration of a bank access cycle time in order to allow the entire unit of data to be accessed, thereby greatly impairing performance.

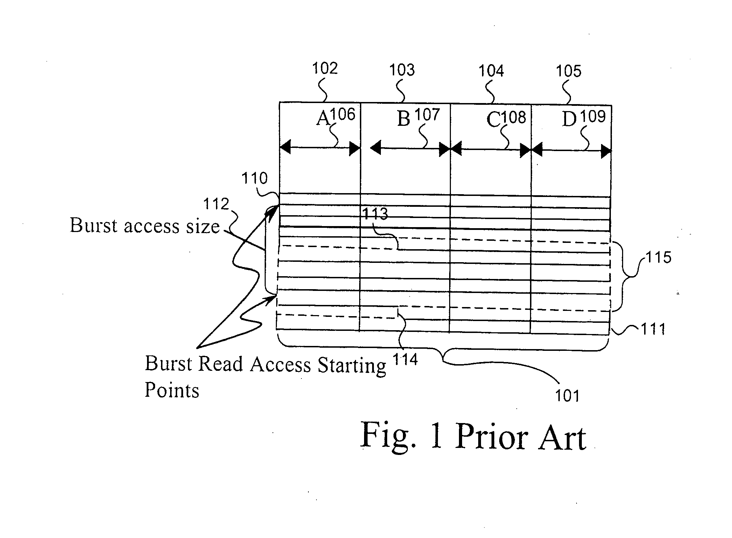

Figure 1 is a memory map diagram illustrating a typical method for achieving higher bandwidth accesses than a single memory device will provide. The method uses parallel access to multiple memory devices in which the multiple memory devices act like one device with a wider data bus. For example, four memory devices of 16-bit-wide memory 102, 103, 104, and 105, which are designated A, B, C, and D, respectively, are arranged in parallel to form a 64-bit memory 101, which could be used to store 1500-byte IP frames. The 16-bit widths 106, 107, 108, and 109, of memory devices A, B, C, and D, respectively, are depicted in Figure 1. In furtherance of this example, 15 address bits and two device selector bits, for a total of 17 address bits are used to address locations in memory. The memory locations can span a memory range between starting location 110 and ending location 111. The burst access size 112 in this example is 16 bytes. A data structure 115, such as a frame, may be stored within the memory range, with the data structure beginning at memory location 113 and ending at memory location 114, for example.

As the alignment of access changes with respect to the data structure (e.g., frame), for example, modification of packet encapsulation can result in the addition or removal of bytes from the start of the packet. If the required access extends across a memory burst boundary, then the number of required reads increases from one to two reads (e.g., two bursts), and therefore the access bandwidth required for a constant data structure access time doubles.
US 2003/074517 discloses a control means for controlling burst accesses to a synchronous dynamic semiconductor memory device comprising at least two memory banks. In order to avoid relatively large time losses due to preparation cycles, the invention provides an address converter unit for converting a logical access address into physical access addresses by splitting the burst access into at least two partial burst accesses, wherein a first physical access address addresses a first memory area of a first memory bank for a first partial burst access and wherein a second physical access address addresses a second memory area of a second memory bank for a second partial burst access.
Thus, a technique is needed to avoid the inefficiencies and shortcomings of the prior art.

### BRIEF DESCRIPTION OF THE SEVERAL VIEWS OF THE DRAWINGS

The present invention may be better understood, and its features made apparent to those skilled in the art by referencing the accompanying drawings.

Figure 1 is a memory map diagram illustrating a typical method for achieving higher bandwidth accesses than a single memory device will provide.

Figure 2 is a memory map diagram illustrating a method and apparatus for efficiently accessing data segments having arbitrary alignment with the memory structure in which they are stored in accordance with at least one embodiment of the present invention.

Figure 3 is a flow diagram illustrating a method for efficiently accessing data segments having arbitrary alignment with a memory structure in which they are stored in accordance with at least one embodiment of the present invention.

Figure 4 is a block diagram of a system within which at least one embodiment of the present invention may be implemented.

Figure 5 is a block diagram illustrating a memory block in accordance with at least one embodiment of the present invention.

Figure 6 is a block diagram illustrating an example of an address in accordance with at least one embodiment of the present invention.

The use of the same reference symbols in different drawings indicates similar or identical items.

### DETAILED DESCRIPTION OF THE INVENTION

One or more embodiments of the present invention provide a method and apparatus for efficiently accessing data segments having arbitrary alignment with the memory structure in which they are stored. For example, a memory structure may be organized so that memory accesses occur with respect to units of memory defined based on a relationship of a total memory bandwidth to a size of an amount of desired data to be accessed. In such an example, the units of memory are defined so as to maximize efficiency by minimizing the number of memory access operations performed to access the amount of desired data. An example of such a method may be performed by defining a memory access quanta size by dividing a total memory bandwidth by a number of quanta based on an amount of data needed and by accessing the memory to retrieve the total memory bandwidth (e.g., burst size) starting at the beginning of the quantum in which the beginning of the desired data is located.

At least one embodiment of the present invention is useful for memory devices supporting burst transfers, as such memory exhibits finite memory bandwidth, such that a finite amount of data can be accessed within a finite amount of time. For example, one unit of memory access, which, for memory devices supporting burst transfers, is typically of a burst size, can be transferred for each memory bank with each memory device every bank access cycle.

At least one embodiment of the present invention may be implemented using four storage devices (e.g., A, B, C, and D), for example, 16-bit wide, 32-byte burst access memory. Accordingly, for such an example, there would be 19 common address bits along with, for each memory device, two unique address bits (i.e., four storage devices, each with two unique address bits, equals eight such address bits), giving a total of 27 address bits. This allows the memory to be addressed in four different modes: A-D, B-A, C-B, and D-C, which allows selection of a predefined burst access starting point that corresponds to the start of a data structure. In this way, as the alignment of access changes with respect to the data structure, an appropriate access starting point can be selected to access the data structure in the minimum number of reads, thereby minimizing the required access bandwidth for a constant data structure access time.

As an example, at least one embodiment of the present invention may be practiced using memory devices, such as DRAM devices. For example, such memory devices may be configured to allow 4 x 16 bits (i.e., 8 bytes) to be accessed for each storage device. There may be several storage devices, such as, for example, four.

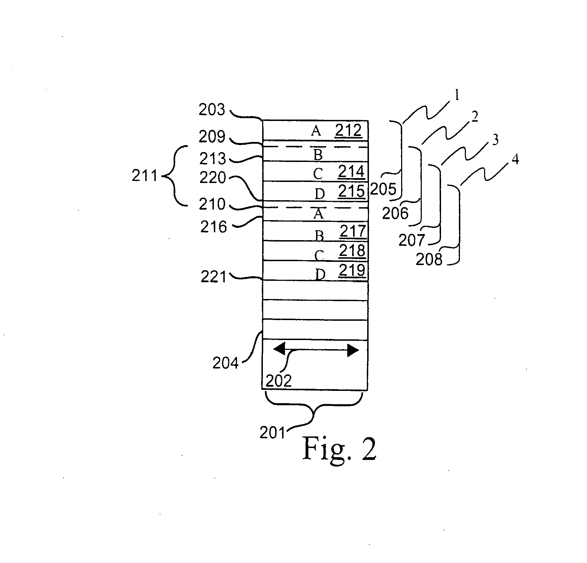

Figure 2 is a memory map diagram illustrating a method and apparatus for efficiently accessing data segments having arbitrary alignment with the memory structure in which they are stored in accordance with at least one embodiment of the present invention. The memory structure 201 is organized to have a memory structure width 202, which, in the illustrated example, is 16 bits. The memory structure 201 begins at a beginning memory location 203 and ends at an ending memory location 204. A number of modes of memory access is provided, where that number of modes of memory access is at least the number of storage devices, which, in the illustrated example, is four (e.g., A, B,C, and D). For example, a first mode 205 of memory access spans memory units of access 212, 213, 214, and 215 of storage devices A, B, C, and D, respectively. A second mode 206 of memory access spans memory units of access 213, 214, 215, and 216 of storage devices B, C, D, and A, respectively. A third mode 207 of memory access spans memory units of access 214, 215, 216, and 217 of storage devices C, D, A, and B, respectively. A fourth mode 208 of memory access spans memory units of access 215, 216, 217, and 218, corresponding to storage devices D, A, B, and C, respectively.

If a frame 211 were to be stored within the memory structure beginning at memory location 209 and ending at memory location 210, that frame 211 could be accessed with only one burst read access of the second mode 206, which would avoid the need for the two accesses that would otherwise have been required. As further examples, the several modes 205-208 illustrated as collectively spanning memory units of access 212-218 may be repeated through memory structure 201 in a similar staggered manner, but beginning at, for example, memory locations 220 or 221, rather than memory location 203. Thus, any portion of the data structure (e.g., frame) spanning no more than four consecutive memory units of access, such as memory units of access 213-216, can be stored or retrieved using a single burst memory access according to a selected one of the several memory access modes 205-208, as implemented over corresponding memory locations within memory structure 201.

For the particular example given, a typical access is 48 bytes (e.g., the payload of an ATM cell). There is no alignment of 48 bytes that cannot be completely retrieved in a single read of a 64-byte burst access in accordance with at least embodiment of the present invention. Consequently, additional overhead, in terms of extra read cycles required to read data that has been re-aligned with respect to access alignment (i.e., access starting point and access burst size) of the memory structure, may be minimized.

At least one embodiment of the present invention is advantageous in that it is able to utilize similar storage devices (e.g., A, B, C, and D) as are typically used, thereby allowing a conventional memory hardware architecture to be preserved. However, by utilizing a few additional address bits, at least one embodiment of the present invention may be used to maximize memory bandwidth efficiency regardless of alignment of portions of the memory structure being accessed with boundaries within the memory structure observed during memory accesses.

Thus, one or more embodiments of the present invention allow data structures, such as those that may comprise frames, to be accessed more efficiently in terms of access time and access bandwidth. Hence, such embodiments provide for cost reductions, if slower less expensive memories are used, and/or performance improvements, if more advanced memories are used, in switches and routers.

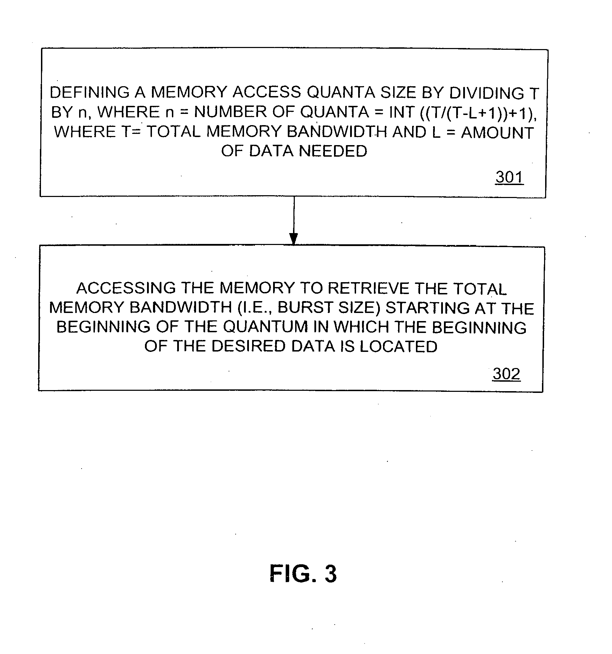

Figure 3 is a flow diagram illustrating a method for efficiently accessing data segments having arbitrary alignment with a memory structure in which they are stored in accordance with at least one embodiment of the present invention. The method begins in step 301, where a memory access quanta size is defined by dividing a total memory bandwidth T by a number of quanta n, where n = INT((T/T-L+1))+1), where L equals an amount of data needed and where the function INT() returns the integer portion of its operand. In step 302, the memory is accessed to retrieve the total memory bandwidth (i.e., burst size) starting at the beginning of the quantum in which the beginning of the desired data is located.

Optionally, the total memory bandwidth retrieved is store contiguously in memory. Optionally, the desired data is a contiguous block of data in memory.

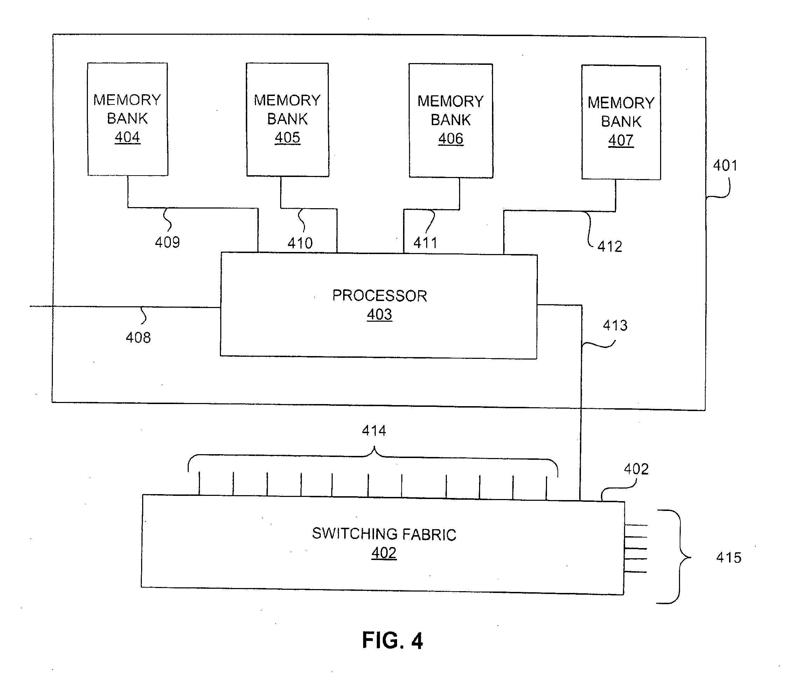

Figure 4 is a block diagram of a system within which at least one embodiment of the present invention may be implemented. The system comprises line card 401 and switching fabric 402. Line card 401 comprises processor 403 and storage devices 404, 405, 406, and 407. Storage device 404 is coupled to processor 403 via coupling 409. Storage device 405 is coupled to processor 403 via coupling 410. Storage device 406 is coupled to processor 403 via coupling 411. Storage device 407 is coupled to processor 403 via coupling 412.

Processor 403 of line card 401 receives a stream of cells of data, which may be delimited, for example, as frames, at input 408. Processor 403 is configured to store and retrieve the cells of data in storage devices 404-407 in accordance with at least one embodiment of the present invention. Processor 403 of line card 401 provides an output 413 to an input among inputs 414 of switching fabric 402. Switching fabric selectively switches data appearing at inputs 414 to outputs 415.

In accordance with at least one embodiment of the present invention, a method and apparatus is provided to minimize the number of units of access needed to transfer a number of units of data to or from a data structure stored in one or more storage devices. The largest transfer with arbitrary alignment that can occur without requiring n+1 quanta (e.g., units of access) may be expressed as L = (T/n)(n-1)+1, where T = total bandwidth and n = the number of quanta. Thus, T/n = size of quanta. The above expression may be rewritten as n = T/(T-L+1). Thus, for example, in the case where T = 64 and L = 48, n = T/(T-L+1) = 64/17, which is approximately 3.8, meaning that a unit of data having a size of 48 bytes can be guaranteed to be transferred in a system having a total bandwidth of 64 bytes using no more than 4 quanta of a quanta size of 16 bytes. Total bandwidth refers to the amount of data that can be accessed with respect to all utilized storage devices during one access cycle.

Each storage device provides its own range of hardware memory locations, which may be mapped into system memory locations of a system. For example, D storage devices, each providing H memory locations, may be combined with appropriate memory mapping to yield a system having S = D x H system memory locations. In order to maximize total memory bandwidth, it is advantageous to map the hardware memory locations of multiple storage devices such that, for access to a contiguous range of system memory locations greater than a number of storage device hardware memory locations of a single storage device that can be accessed during a single memory access cycle, it is beneficial to map system memory locations such that portions of the ranges of hardware memory locations of the multiple storage devices appear in a sequential pattern. For example, it is desirable to map a portion of the hardware memory locations of a first storage device (e.g., A) having a size up to as much data as may be read from such a first device during one memory access operation followed by a portion of the hardware memory locations of a second storage device (e.g., B) having a size up to as much data as may be read from such a second device during one memory access operation followed by instances of portions of hardware memory locations of any other storage devices in sequence.

In the specific example of four storage devices designated A, B, C, and D, a repeating pattern of instances of portions of hardware memory locations of the four storage devices may be used, as depicted in Figure 2, preferably where each portion of hardware memory locations is of a size up to that which may be accessed from each storage device during one memory access operation. Thus, if portions of hardware memory locations for storage devices A, B, C, and D are designated, in ascending order, as A1, A2, A3,... for storage device A; B1, B2, B3,... for storage device B; C1, C2, C3,... for storage device C, and D1, D2, D3,... for storage device D, then such portions may be mapped into system memory space such in the following order: A1, B1, C1, D1, A2, B2, C2, D2, A3, B3, C3, D3, A4, B4, C4, and D4.

In order to implement a system allowing access to memory in accordance with one or more embodiments of the present invention, an addressing system is provided to allow selection of data among blocks of data from multiple banks of multiple storage devices. For example, if there are four storage devices, each having two banks, a block may be defined to include four instances of units of access for each bank of each storage device. In such a case, efficient addressing may be provided by concatenating address bits, where a first set of address bits serves as a block pointer to identify the block, a second set of address bits serves as an instance pointer to identify the instance of units of access, and a third set of bits (which, in the case of only two banks, would be only a single bit) serves to identify the selected bank.

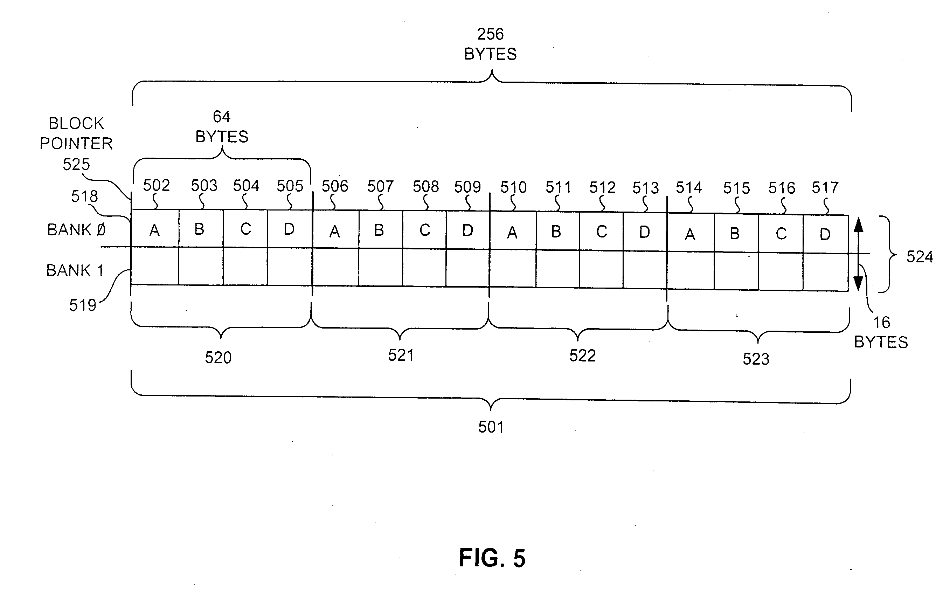

Figure 5 is a block diagram illustrating a memory block in accordance with at least one embodiment of the present invention. The memory block 501 comprises a plurality of instances of units of access 520, 521, 522, and 523 for each of a plurality of banks 518 and 519. In the illustrated example, there are four instances of units of access 520, 521, 522, and 523, and two banks 518 and 519. Each instance of a unit of access includes data corresponding to a plurality of storage devices. For example, the first instance of units of access 520 includes data 502, 503, 504, and 505 corresponding to storage devices A, B, C, and D, respectively. As another example, the second instance of units of access 521 includes data 506, 507, 508, and 509 corresponding to storage devices A, B, C, and D, respectively. As a further example, the third instance of units of access 522 includes data 510, 511, 512, and 513 corresponding to storage devices A, B, C, and D, respectively. As yet another example, the fourth instance of units of access 523 includes data 514, 515, 516, and 517, corresponding to storage devices A, B, C, and D, respectively. The data described above pertain to a first bank 518. Also included in the above instances of units of access are corresponding data for a second bank 519.

In the illustrated example, each bank of each storage device for each instance of units of access corresponds to eight bytes of data. Since accesses may be made to multiple banks of a storage device within one bank access cycle time, 16 bytes, depicted as quantity 524, may be accessed for each storage device every bank access cycle time. Thus, each instance of units of access 520-523 provides access for 64 bytes of data. Consequently, the entire block 501 corresponds to 256 bytes of data.

In accordance with such an example, addressing may be provided by expressing an address as a concatenation of a block pointer, an instance selector, and a bank selector. The block pointer 525 comprises a one or more bits, such that a value represented by the one or more bits points to the beginning of the block 501, which may be one of many such blocks within a data structure stored in the storage devices. The instance selector comprises one or more bits, such that a value represented by the one or more bits selects among instances of units of access, such as 520-523. In accordance with a preferred data structure organization, the instance selector can remain the same for accesses to both of banks 518 and 519. The bank selector comprises one or more bits, such that a value represented by the one or more bits selects among banks, such as banks 518 and 519. Since a plurality of storage devices is typically similarly configured, the bank selector may be used in a common manner for all such storage devices.

Thus, an address that can uniquely identify data for each access of the storage devices is provided. Since data may be accessed simultaneously for a plurality of storage devices, and data pertaining to each storage device can be uniquely identified according to the manner in which the storage devices are physically interfaced, for example via couplings 409-412 of Figure 4, it is not necessary for the addressing system to distinguish between the plurality of storage devices.

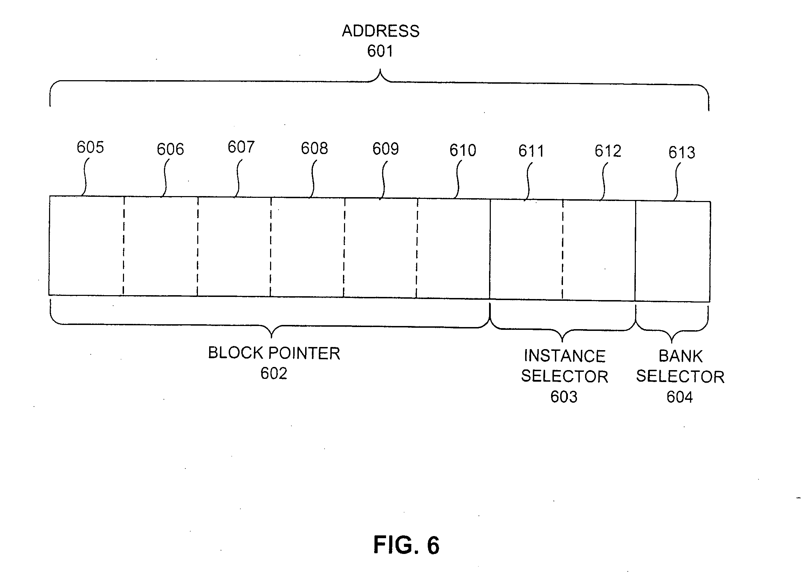

Figure 6 is a block diagram illustrating an example of an address in accordance with at least one embodiment of the present invention. Address 601 comprises block pointer 602, instance selector 603, and bank selector 604. Block pointer 602 comprises one or more bits 605, 606, 607, 608, 609, and 610. Instance selector 603 comprises one or more bits 611 and 612. Bank selector 604 comprises one or more bits, such as bit 613. While block pointer 602 is illustrated as comprising the most significant bits of address 601, and bank selector 604 is illustrated as comprising least significant bit 613 of address 601, it should be understood that other arrangements of the bits of block pointer 602, instance selector 603, and bank selector 604 may be used.

Block pointer 602 can be used in the manner of block pointer 525 of Figure 5 to identify a memory block, such as memory block 501, to be accessed. Thus, if block pointer 602 includes a given number of bits 605-610, a number of memory blocks less than or equal to two raised to a power equal to that given number may be accessed. Instance selector 603 can be used to identify which instance of a number of instances of units of access, such as 520-523 of Figure 5, is to be accessed. Thus, if instance selector 603 includes a given number of bits 611 and 612, a number of instances of units of access less than or equal to two raised to a power equal to that given number may be accessed. Bank selector 604 can be used to identify which of a plurality of banks, such as banks 518 and 519, is to be accessed. Thus, if bank selector 604 includes a given number of bits 613, a number of banks less than or equal to two raised to a power equal to that given number of bits may be accessed.

In accordance with at least one embodiment of the present invention, a method may be performed comprising the steps of defining a memory access quanta size and accessing memory to retrieve an amount of retrieved data. The step of defining a memory access quanta size may be performed by dividing a total memory bandwidth by a number of quanta. The number of quanta may be equal to an integer portion of one plus the total memory bandwidth divided by a quantity equal to the total memory bandwidth minus an amount of desired data needed plus one. The step of accessing the memory may be performed to retrieve an amount of retrieved data of the total memory bandwidth starting at a beginning of a quantum of the quanta in which a beginning of the desired data is located.

Optionally, the above method may be practiced wherein the retrieved data is stored contiguously in a system memory space of the memory. Optionally, the above method may be practiced wherein the desired data is a contiguous block of data within a system memory space of the memory. The desired data may be an asynchronous transfer mode (ATM) cell and/or the total memory bandwidth may be 64 bytes.

In accordance with at least one embodiment of the present invention, a method may be performed comprising the step of accessing within one memory access operation a plurality of storage devices such that a first portion of the plurality of storage devices is accessed at a first hardware memory address and a second portion of the plurality of storage devices is accessed at a second hardware memory address adjacent to the first hardware memory address. Optionally, the above method may be practiced wherein the plurality of storage devices are separate storage devices provided with respectively separate address buses. Optionally, the above method may be practiced wherein the plurality of storage devices are implemented within a larger storage device, the larger storage device comprising an input to select an addressing mode and, even more particularly, wherein the addressing mode allows selection of different hardware memory addresses among the plurality of storage devices for a same memory access operation.

In accordance with at least one embodiment of the present invention, a system may be provided comprising a first storage device, a second storage device, and a processor. In such a system, the processor is coupled to the first storage device and to the second storage device. The processor is configured to access within one memory access operation, a first hardware memory address of the first storage device and a second hardware memory address of the second storage device, the second hardware memory address being adjacent to the first hardware memory address.

Optionally, the above system may be practiced wherein the first storage device and the second storage device are separate storage devices provided with respectively separate address buses. Optionally, the above system may be practiced wherein the first storage device and the second storage device are implemented within a larger storage device, the larger storage device comprising an input to select an addressing mode. In such a case, the system may be practiced wherein the addressing mode allows selection of different hardware memory addresses among the first storage device and the second storage device for a same memory access operation.

In accordance with at least one embodiment of the present invention, a memory system may be practiced comprising a plurality of memory banks accessible via a plurality of modes of access to allow selection among a plurality of predefined memory access starting points, wherein the predefined memory access starting points occur at intervals of less than a total memory bandwidth. Optionally, such a memory system may be practiced wherein the plurality of memory banks are accessible via burst access. Optionally, such a memory system may be practiced wherein the total memory bandwidth is equal to the burst size.

As yet another option, the above memory system may be practiced wherein the predefined memory access starting points occur in the memory banks as a function of a size of a desired data block to be accessed. Optionally, the above memory system may be practiced wherein the amount of desired data is stored contiguously within a system memory address space of the memory system. In some cases, the amount of desired data may be an asynchronous transfer mode (ATM) cell. Optionally, the above memory system may be practiced wherein the predefined memory access starting points occur in the memory banks at intervals of the total memory bandwidth divided by a number of the intervals containing an amount of desired data, wherein the number of the intervals is equal to an integer portion of one plus the total memory bandwidth divided by a quantity equal to the total memory bandwidth minus the amount of desired data needed plus one.

Thus, a method and apparatus for allocation of a data structure across multiple storage devices has been presented. Although the invention has been described using certain specific examples, it will be apparent to those skilled in the art that the invention is not limited to these few examples. Other embodiments utilizing the inventive features of the invention will be apparent to those skilled in the art, and are encompassed herein.

## Claims

1. A method for accessing a memory structure (201) comprised of a plurality of memory units (A, B, C, D) having a total memory bandwidth T (202) for accessing a unit of data (211) of a size L, **characterized by** the steps of:
organizing the physical addresses in said memory structure as a succession of words from all memory units (A, B, C, D), and enabling a plurality of modes of memory access, each mode starting with an address from one of the memory units (A, B, C, D);
determining the numbers n of units of access (520, 521, 522, 523) and a quanta size for each unit of access for accessing the unit of data in the memory structure using a minimum number of units of access; and
accessing said unit of data (211) via n units of access according to a selected mode of memory access, using a pointer (525) which provides the start of the unit of data.

2. The method of claim 1 wherein n is calculated as the expression Int (T/(T-L+1))+1, where Int is the integer part.

3. The method of claim 2 wherein quanta size for each unit of access is the ratio of the total size T to the number n of units of access.

4. The method of claim 1 wherein each of said memory units includes a plurality of banks (518, 519).

5. The method of claim 1 wherein the unit of data is an asynchronous transfer mode (ATM) cell.

6. The method of claim 1 wherein the total memory bandwidth is T=64 bytes.

7. The method of claim 1 wherein one unit of access of size 64 bytes is needed for accessing a unit of data of L=48 bytes in a memory structure of T=64 bytes made of four units (A, B, C, D).

## Patentansprüche

1. Ein Verfahren zum Zugriff auf eine Speicherstruktur (201) bestehend aus einer Vielzahl von Speichereinheiten (A, B, C, D) mit einer Gesamtspeicherbandbreite T (202) zum Zugriff auf eine Dateneinheit (211) mit einer Größe L, **gekennzeichnet durch** folgende Schritte,
Organisieren der physikalischen Adresse in der besagten Speicherstruktur als eine Aufeinanderfolge von Wörtern von allen Speichereinheiten (A, B, C, D), und Aktivieren einer Vielzahl von Speicherzugriffs-Modi, wobei jeder Modus mit einer Adresse aus einer der Speichereinheiten (A, B, C, D) beginnt;
Bestimmen der Anzahl n von Zugriffseinheiten (520, 521, 522, 523) und einer Quantengröße einer jeden Zugriffseinheit für den Zugriff auf die Dateneinheit in der Speicherstruktur mit einer Mindestanzahl von Zugriffseinheiten; und
Zugreifen auf die besagte Dateneinheit (211) über n Zugriffseinheiten entsprechend einem ausgewählten Modus des Speicherzugriffs anhand eines Pointers (525), welcher den Start der Dateneinheit bewirkt.

2. Das Verfahren nach Anspruch 1, worin n als der Ausdruck Int (T/(T-L+1))+1 berechnet ist, wobei Int der Integer-Teil ist.

3. Das Verfahren nach Anspruch 2, worin die Quantengröße für jede Zugriffseinheit das Verhältnis der Gesamtgröße T zur Anzahl n von Zugriffseinheiten ist.

4. Das Verfahren nach Anspruch 1. worin eine jede der besagten Speichereinheiten eine Vielzahl von Banken (518, 519) enthält.

5. Das Verfahren nach Anspruch 1, worin die Dateneinheit eine Zelle im asynchronen Übertragungsmodus (ATM) ist,

6. Das Verfahren nach Anspruch 1, worin die Gesamtspeicherbandbreite T=64 Bytes beträgt.

7. Das Verfahren nach Anspruch 1, worin eine Zugriffseinheit mit einer Größe von 64 Bytes für den Zugriff auf eine Dateneinheit mit L=48 Bytes in einer Speicherstruktur von T=64 Bytes, welche aus vier Einheiten (A, B, C, D) besteht, erforderlich ist

## Revendications

1. Procédé permettant d'accéder à une structure de mémoire (201) constituée par une pluralité d'unités de mémoire (A, B, C, D) ayant une bande passante de mémoire totale T (202) pour accéder à une unité de données (211) d'une dimension L, **caractérisé par** les étapes suivantes :
organisation des adresses physiques dans ladite structure de mémoire en une succession de mots de toutes les unités de mémoire (A, B, C, D) et activation d'une pluralité de modes d'accès en mémoire, chaque mode commençant avec une adresse de l'une des unités de mémoire (A, B, C, D) ;
détermination des nombres n d'unités d'accès (520, 521, 522, 523) et d'un quantum de dimension pour chaque unité d'accès afin d'accéder à l'unité de données dans la structure de mémoire en utilisant un nombre minimum d'unités d'accès ; et
accès à ladite unité de données (211) via n unités d'accès selon un mode d'accès en mémoire sélectionné, en utilisant un pointeur (525) qui provoque le commencement de l'unité de données.

2. Procédé selon la revendication 1, dans lequel n est calculé par l'expression Int (T/(T-L+1))+1, où Int est l'entier.

3. Procédé selon la revendication 2, dans lequel le quantum de dimension pour chaque unité d'accès est le rapport de la dimension totale T sur le nombre n d'unités d'accès.

4. Procédé selon la revendication 1, dans lequel chacune desdites unités de mémoire comprend une pluralité de bancs de mémoire (518, 519)

5. Procédé selon la revendication 1, dans lequel l'unité de données est une cellule en mode de transfert asynchrone (ATM).

6. Procédé selon la revendication 1, dans lequel la bande passante totale de la mémoire est T 64 octets.

7. Procédé selon la revendication 1, dans lequel une unité d'accès d'une dimension de 64 octets est nécessaire pour accéder a une unité de données de L = 48 octets dans une structure de mémoire de T = 64 octets prévue pour quatre unités (A, B. C, D).
